# EUROPEAN PATENT SPECIFICATION

(11) **EP 0 791 492 B1**
(45) Date of publication and mention of the grant of the patent: **28.07.1999**
(21) Application number: 97102591.1
(22) Date of filing: 18.02.1997
(51) Int. Cl.: B60G 17/015

(54) **Suspension control apparatus and method of controlling suspension**
Vorrichtung und Verfahren zur Regelung einer Aufhängung
Dispositif et méthode de réglage de la suspension

(30) Priority: 23.02.1996 JP 6177796
(43) Date of publication of application: 27.08.1997
(73) Proprietor: TOYOTA JIDOSHA KABUSHIKI KAISHA, Aichi-ken 471-8571 (JP)
(72) Inventor: Shono, Shoichi, Toyota-shi, Aichi-ken, 471 (JP); Tabata, Masaaki, Toyota-shi, Aichi-ken, 471 (JP); Ogawa, Kazuo, Toyota-shi, Aichi-ken, 471 (JP); Harada, Kenji, Toyota-shi, Aichi-ken, 471 (JP); Morikawa, Hirohiko, Toyota-shi, Aichi-ken, 471 (JP); Yoshida, Tomomasa, Toyota-shi, Aichi-ken, 471 (JP)
(74) Representative: Winter, Brandl, Fürniss, Hübner, Röss, Kaiser, Polte, Kindermann Partnerschaft

(56) References cited:
- US-A- 5 290 048
- PATENT ABSTRACTS OF JAPAN vol. 010, no. 062 (M-460), 12 March 1986 & JP 60 209311 A (KAYABA KOGYO KK), 21 October 1985,
- PATENT ABSTRACTS OF JAPAN vol. 011, no. 310 (M-630), 9 October 1987 & JP 62 096125 A (MAZDA MOTOR CORP;OTHERS: 01), 2 May 1987,
- PATENT ABSTRACTS OF JAPAN vol. 016, no. 350 (M-1287), 28 July 1992 & JP 04 108017 A (NISSAN MOTOR CO LTD;OTHERS: 01), 9 April 1992,
- PATENT ABSTRACTS OF JAPAN vol. 015, no. 437 (M-1176), 7 November 1991 & JP 03 182831 A (MAZDA MOTOR CORP), 8 August 1991,
- PATENT ABSTRACTS OF JAPAN vol. 016, no. 538 (M-1335), 9 November 1992 & JP 04 201711 A (KAYABA IND CO LTD), 22 July 1992,
- PATENT ABSTRACTS OF JAPAN vol. 015, no. 146 (M-1102), 12 April 1991 & JP 03 025016 A (KAYABA IND CO LTD), 1 February 1991,
- PATENT ABSTRACTS OF JAPAN vol. 014, no. 212 (M-0969), 2 May 1990 & JP 02 048209 A (KAYABA IND CO LTD), 19 February 1990,

## Description

### BACKGROUND OF THE INVENTION

### Field of the Invention

The present invention relates to a suspension control apparatus for feeding and discharging a working fluid to and from actuators interposed between a vehicle body and respective wheels through drive and regulation of control valves, so as to adjust the vehicle height.

### Description of the Prior Art

Such suspension control apparatuses, which feed and discharge a working fluid to and from actuators in order to adjust the vehicle height, have functions discussed below. By way of example, when the vehicle reaches a high-speed driving condition of 80 km/h or faster, the suspension control apparatus lowers the vehicle height from a standard level in an ordinary-speed driving condition, in order to ensure the driving stability. The suspension control apparatus works to keep the vehicle height at a fixed level, irrespective of a variation in number of passengers or weight of loading. The suspension control apparatus can also lower the vehicle height from a standard level in a driving condition, in order to enable a driver and other passengers to easily ride on or get off the vehicle. The suspension control apparatus may be provided with a switch that is used to change the vehicle height between a high level and a low level arbitrarily. The vehicle height can be lowered or raised according to the requirement specified through an operation of the switch. In any of these cases, a control valve is driven and regulated to make the vehicle height at the moment (hereinafter referred to as the current vehicle height) coincide with a target vehicle height.

In addition to the adjustment of the vehicle height with the actuators for the respective wheels, recently proposed techniques connect or disconnect each pair of actuators for left and right front wheels or for left and right rear wheels (hereinafter simply referred to as the pair of actuators) with each other or from each other after the adjustment of the vehicle height (see for example, JP-A-59-113213 and JP-A-04-108017, each corresponding to the preamble of claim 1). These techniques, which can switch the pair of actuators to a connecting position, have the following advantages.

An extreme input of road surface, such as tramping, causes vibrations of the left and right wheels in reversed phases along the vertical axis, and the internal pressures of the actuators for the left and right wheels are significantly varied in an alternating manner. This leads to an excessive increase in pressure in the whole system including the pair of actuators. The pair of actuators in the connecting position enable a working fluid to be fed to the wheels on one side, in order to relieve an increase in internal pressure of the wheels on the other side, thereby depressing the increase in pressure. When the vehicle runs on a rough road surface, such as an undulated road surface, connection of the pair of actuators ensures the sufficient grips of the left and right wheels independently, so as to improve the driving stability. In case that the vehicle runs on a flat road surface after the adjustment of the vehicle height on a rough road surface, connection of the pair of actuators enables the internal pressures of the pair of actuators to be substantially equal to each other after the shift to the flat road surface. This effectively prevents the attitude of the vehicle body from being unnaturally inclined. When the pair of actuators are in the connecting position at a turn of the vehicle, on the other hand, the rolling angle increases with an increase in steering angle. In this case, the pair of actuators are switched to a disconnecting position, in order to depress the increase in rolling angle.

Irrespective of these advantages, the conventional suspension control apparatuses still have some drawbacks as discussed below.

The pair of actuators are switched between the connecting position and the disconnecting position through operation of a solenoid valve, which is disposed in the flow path after the control valve used for feeding and discharging a working fluid to and from the actuators. The working fluid is fed to and discharged from the respective actuators via the control valve and the solenoid valve.

The solenoid valve used for switching the pair of actuators between the connecting position and the disconnecting position generally includes an orifice. In the process of discharging the working fluid from the actuators to lower the vehicle height, the working fluid passes through the orifice. The pressure loss of the working fluid passing through the orifice undesirably decreases the flow rate of the working fluid. When the vehicle is driven at a high speed, when a driver and other passengers ride on or get off the vehicle, or when the vehicle height is set to a LOW level, this structure slows the descending rate of the vehicle height and requires a relatively long time for adjustment of the vehicle height.

The working fluid also passes through the orifice of the solenoid valve in the process of raising the vehicle height. The flow rate of the working fluid in this case, however, depends upon the pump pressure, and no significant problems arise because of the current performance of available pumps. Due to the space restriction on the vehicle, the feeding rate of the working fluid by the pump is relatively lower than the discharge rate of the working fluid by the own weight of the vehicle body, and this results in no significant pressure loss by the orifice. The orifice may be extended to enhance the flow rate of the working fluid in the process of lowering the vehicle height. The extension of the orifice makes the solenoid valve rather bulky. The bulky solenoid valve is not easily handled nor suitable for the installation on the restricted space of the vehicle. This solution is accordingly not practical.

### SUMMARY OF THE INVENTION

The object of the present invention is thus to quickly lower the vehicle height according to the requirement.

At least part of the above and the other related objects is realized by a suspension control apparatus including actuators interposed between a vehicle body and respective wheels to suspend the vehicle body and change a vehicle height through supply or discharge of a working fluid. The suspension control apparatus drives and controls a control valve for supplying and discharging the working fluid to and from the actuators, so as to adjust the vehicle height. The suspension control apparatus further includes: Connection control means disposed in a flow path between the control valve and a pair of actuators corresponding to a pair of wheels, the connection control means switching the pair of actuators between a connecting position and a disconnecting position; and bypass means for bypassing the connection control means and leading the working fluid to the control valve only when the working fluid is discharged from the actuators.

In the suspension control apparatus of the present invention thus constructed, the control valve is driven and regulated to feed or discharge a working fluid to or from actuators corresponding to the respective wheels, so as to adjust the vehicle height. The connection control means switches a pair of actuators corresponding to a pair of wheels (hereinafter simply referred to as the pair of actuators) between a connecting position and a disconnecting position. This structure effectively depresses an increase in pressure at the time of an extreme input of road surface and depresses an increase in rolling angle at a turn of the vehicle.

In the suspension control apparatus of the present invention, only when the working fluid is discharged from the actuators to lower the vehicle height, the bypass means bypasses the connection control means and leads the working fluid to the control valve. This effectively reduces the pressure loss due to the flow through the connection control means and enhances the flow rate of the working fluid discharged from the actuators. The suspension control apparatus of the invention improves the flow rate of the working fluid discharged from the actuators, thereby increasing the descending rate of the vehicle height and attaining the desired vehicle height within a very short time period.

The suspension control apparatus of the present invention may have structures according to the following embodiments.

In accordance with a first embodiment, the connection control means includes: a front-wheel connection control valve disposed in a flow path between the control valve and a pair of front-wheel actuators corresponding to left and right front wheels, and the front-wheel connection control valve switching the pair of front-wheel actuators between a connecting position and a disconnecting position; a rear-wheel connection control valve disposed in a flow path between the control valve and a pair of rear-wheel actuators corresponding to left and right rear wheels, the rear-wheel connection control valve switching the pair of rear-wheel actuators between a connecting position and a disconnecting position. And the bypass means includes front-wheel bypass means and rear-wheel bypass means for respectively bypassing the front-wheel connection control valve and the rear-wheel connection control valve and leading the working fluid to the control valve only when the working fluid is discharged from the actuators.

In the structure of the first embodiment, the flow rate of the working fluid discharged from the actuators is improved by bypassing the front-wheel connection control valve and the rear-wheel connection control valve. This structure enables the vehicle height to be quickly lowered at all the wheels of the vehicle as well as to be quickly and independently lowered only at the left and right front wheels or at the left and right rear wheels.

In accordance with a second embodiment, the connection control means is disposed only in a flow path between the control valve and a pair of front-wheel actuators corresponding to left and right front wheels and switches the pair of front-wheel actuators between a connecting position and a disconnecting position.

In the structure of the second embodiment, the flow rate of the working fluid discharged from the actuators can be improved only for the left and right front wheels. This structure enables the front wheels to be lowered consistently prior to the rear wheels, and thereby prevents headlamp from unintentionally turning upward when the driver lowers the vehicle height during a night drive.

The present invention is also directed to a method of controlling suspension, which includes the steps of: providing actuators interposed between a vehicle body and respective wheels to suspend the vehicle body and change a vehicle height through supply or discharge of a working fluid; and driving and controlling a control valve for supplying and discharging the working fluid to and from the actuators, so as to adjust the vehicle height. The method further includes the step of:
bypassing connection control means and leading the working fluid to the control valve only when the working fluid is discharged from the actuators, the connection control means being disposed in a flow path between the control valve and a pair of actuators corresponding to a pair of wheels and switching the pair of actuators between a connecting position and a disconnecting position.

In the method of the present invention, the control valve is driven and regulated to feed or discharge a working fluid to or from actuators corresponding to the respective wheels, so as to adjust the vehicle height. The connection control means switches the pair of actuators between a connecting position and a disconnecting position. This structure effectively depresses an increase in pressure at the time of an extreme input of road surface and depresses an increase in rolling angle at a turn of the vehicle.

In the method of the present invention, only when the working fluid is discharged from the actuators to lower the vehicle height, the bypass means bypasses the connection control means and leads the working fluid to the control valve. This effectively reduces the pressure loss due to the flow through the connection control means and enhances the flow rate of the working fluid discharged from the actuators. The method of the invention improves the flow rate of the working fluid discharged from the actuators, thereby increasing the descending rate of the vehicle height and attaining the desired vehicle height within a very short time period.

The method of the present invention may go into applications discussed below.

In accordance with a first application, the method includes the step of:
bypassing the connection control means and leading the working fluid to the control valve only when the working fluid is discharged from the actuators, the connection control means comprising a front-wheel connection control valve and a rear-wheel connection control valve, the front-wheel connection control valve being disposed in a flow path between the control valve and a pair of front-wheel actuators corresponding to left and right front wheels and switching the pair of front-wheel actuators between a connecting position and a disconnecting position, the rear-wheel connection control valve being disposed in a flow path between the control valve and a pair of rear-wheel actuators corresponding to left and right rear wheels and switching the pair of rear-wheel actuators between a connecting position and a disconnecting position.

In the structure of the first application, the flow rate of the working fluid discharged from the actuators is improved by bypassing the front-wheel connection control valve and the rear-wheel connection control valve. This structure enables the vehicle height to be quickly lowered at all the wheels of the vehicle as well as to be quickly and independently lowered only at the left and right front wheels or at the left and right rear wheels.

In accordance with a second application, the method includes the step of:
bypassing the connection control means and leading the working fluid to the control valve only when the working fluid is discharged from the actuators, the connection control means being disposed in a flow path between the control valve and a pair of front-wheel actuators corresponding to left and right front wheels and switching the pair of front-wheel actuators between a connecting position and a disconnecting position.

In the structure of the second application, the flow rate of the working fluid discharged from the actuators can be improved only for the left and right front wheels. This structure enables the front wheels to be lowered consistently prior to the rear wheels, and thereby prevents headlamp from unintentionally turning upward when the driver lowers the vehicle height during a night drive.

These and other objects, features, aspects, and advantages of the present invention will become more apparent from the following detailed description of the preferred embodiment with the accompanying drawings.

### BRIEF DESCRIPTION OF THE DRAWINGS

Fig. 1 schematically shows a fluid circuit in a suspension control apparatus 10 embodying the present invention constructed as a fluid pressure suspension;
Fig. 2 is a flowchart showing a routine of adjusting the vehicle height executed by an ECU 60 of the suspension control apparatus 10; and
Fig. 3 is a flowchart showing a routine of connecting actuators executed by the ECU 60 of the suspension control apparatus 10.

### DESCRIPTION OF THE PREFERRED EMBODIMENTS

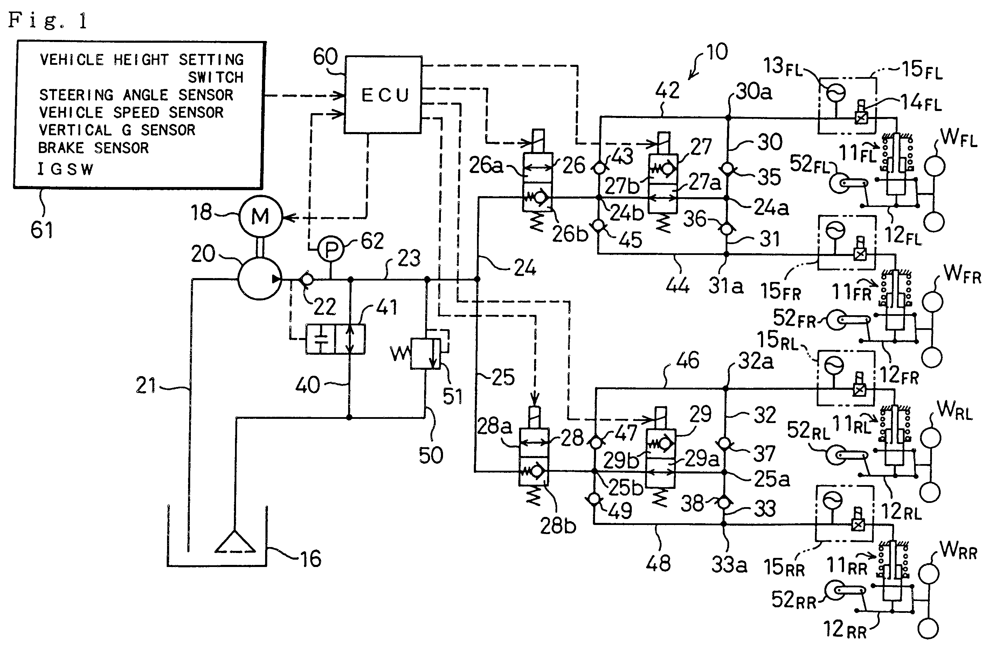

A best mode of carrying out the present invention is described below as a preferred embodiment. Fig. 1 schematically shows a fluid circuit in a suspension control apparatus 10 embodying the present invention. Referring to Fig. 1, the suspension control apparatus 10 is constructed as a fluid pressure suspension utilizing a fluid pressure cylinder.

The suspension control apparatus 10 is provided with actuators 11i (11FL, 11FR, 11RL, and 11RR) for a left front wheel WFL, a right front wheel WFR, a left rear wheel WRL, and a right rear wheel WRR. In the description below, the subscript 'i' arbitrarily represents FL, FR, RL, and RR corresponding to the respective wheels.

The actuator 11i, which is a cylinder piston device, is interposed between the vehicle body and a suspension member 12i for supporting the corresponding wheel (that is, between the vehicle body and each wheel) to suspend the vehicle body. The actuator 11i vertically moves the piston every time when a working fluid (oil in this embodiment) is fed to or discharged from a working fluid chamber, so as to change the vehicle height along the vertical axis at the corresponding wheel. A damping force varying mechanism 15i including an accumulator 13i and a variable diaphragm 14i is disposed in the flow path before each actuator 11i. The damping force varying mechanism 15i enables the actuator 11i to vary the damping force against the vertical movement of the vehicle body.

The suspension control apparatus 10 further includes a reserve tank 16 for storing oil, which is fed to and discharged from the respective actuators 11i from and to the reserve tank 16 in the following manner.

Oil stored in the reserve tank 16 is drawn through a suction pipe 21 by a pump 20 driven by a motor 18 and fed under pressure to the constituents in the flow path after the pump 20. The oil drawn by the pump 20 is flown through a main supply conduit 23 via a first check valve 22 and reaches a front-wheel supply conduit 24 and a rear-wheel supply conduit 25 which are branched off from the main supply conduit 23. A front-wheel control valve 26 for adjusting the vehicle height at the left and right front wheels WFL and WFR and a front-wheel connection control valve 27 for switching the pair of actuators 11FL and 11FR for the left front wheel WFL and the right front wheel WFR between a connecting position and a disconnecting position are arranged in series in this order in the front-wheel supply conduit 24. A rear-wheel control valve 28 for adjusting the vehicle height at the left and right rear wheels WRL and WRR and a rear-wheel connection control valve 29 for switching the pair of actuators 11RL and 11RR for the left rear wheel WRL and the right rear wheel WRR between a connecting position and a disconnecting position are arranged in series in this order in the rear-wheel supply conduit 25.

Referring to Fig. 1, the front-wheel control valve 26, the front-wheel connection control valve 27, the rear-wheel control valve 28, and the rear-wheel connection control valve 29 are two-position selector valves selectively switched between two-way connecting positions 26a through 29a and single-way connecting positions 26b through 29b. At the two-way connecting positions 26a through 29a, the flow path of the front-wheel supply conduit 24 or the rear-wheel supply conduit 25 is open in both ways. At the single-way connecting positions 26b through 29b, on the other hand, whereas the oil flow from the pump 20 is shut, the oil flow from the actuators 11i is allowed only at a predetermined or greater pressure. The front-wheel control valve 26 and the rear-wheel control valve 28 are generally at the single-way connecting positions 26b and 28b shown in Fig. 1 and changed to the two-way connecting positions 26a and 28a at the time of adjusting the vehicle height (at the time of raising or lowering the vehicle height). The front-wheel connection control valve 27 and the rear-wheel connection control valve 29 are, on the other hand, generally at the two-way connecting positions 27a and 29a shown in Fig. 1 and changed to the single-way connecting positions 27b and 29b at a turn of the vehicle.

When the front-wheel control valve 26 and the rear-wheel control valve 28 are at the single-way connecting positions 26b and 28b, no oil is flown from the actuators 11i at an ordinary internal pressure of the actuators 11i for the decrease in vehicle height. The oil flow from the actuators 11i is allowed only when a pressure exceeding the ordinary internal pressure is applied to the actuators 11i. This structure enables the front-wheel control valve 26 and the rear-wheel control valve 28 to be switched to the single-way connecting positions 26b and 28b, in order to maintain the vehicle height at the moment. The details of the process of adjusting the vehicle height with the front-wheel control valve 26 and the rear-wheel control valve 28 and the process of switching between connection and disconnection of the actuators with the front-wheel connection control valve 27 and the rear-wheel connection control valve 29 will be described later.

The front-wheel supply conduit 24 is branched off at a diverging point 24a after the front-wheel connection control valve 27 to a left front-wheel conduit 30 connecting with the actuator 11FL for the left front wheel WFL and a right front-wheel conduit 31 connecting with the actuator 11FR for the right front wheel WFR. In a similar manner, the rear-wheel supply conduit 25 is branched off at a diverging point 25a to a left rear-wheel conduit 32 and a right rear-wheel conduit 33. When the front-wheel control valve 26 and the rear-wheel control valve 28 are switched from the single-way connecting positions 26b and 28b shown in Fig. 1 to the two-way connecting positions 26a and 28a, oil flowing through the main supply conduit 23 to the front-wheel supply conduit 24 and the rear-wheel supply conduit 25 passes through these control valves 26 and 28 and the subsequent front-wheel connection control valve 27 and rear-wheel connection control valve 29 and is fed to the actuators 11i for the respective wheels via check valves 35 through 38 for raising the vehicle height, which are disposed respectively after the diverging points 24a and 25a. The vehicle height is accordingly increased at the wheels corresponding to the actuators 11i that have received the supply of oil flow. The front-wheel control valve 26 and the rear-wheel control valve 28 are switched independently, and the vehicle height can thus be increased only for the left and right front wheels, only for the left and right rear wheels, or for all the wheels of the vehicle.

The suspension control apparatus 10 includes a drain pipe 40 and a discharge control valve 41 as a mechanism for discharging oil from the actuators 11i to lower the vehicle height. The drain pipe 40 is branched off from the main supply conduit 23 to reach the reserve tank 16, and is opened and closed by the discharge control valve 41. The discharge control valve 41 is a two-position selector valve actuated with a pressure of the flow path before the first check valve 22 as a pilot pressure. The discharge control valve 41 is switched from an opening position shown in Fig. 1 to a closing position in order to close the drain pipe 40 at the time of driving the pump 20, that is, at the time of increasing the vehicle height. When the pump 20 is stopped to lower the pressure of the flow path before the first check valve 22 and heighten the pressure of the flow path after the first check valve 22, that is, when the vehicle height is lowered, the discharge control valve 41 is at the opening position shown in Fig. 1 to open the drain pipe 40.

The suspension control apparatus 10 further includes bypasses for the respective actuators 11i as another mechanism for lowering the vehicle height. The suspension control apparatus 10 has a left front-wheel bypass 42 and a check valve 43 for lowering the vehicle height with respect to the actuator 11FL. The left front-wheel bypass 42 is branched off from the left front-wheel conduit 30 at a diverging point 30a and bypasses the front-wheel connection control valve 27 to reach a diverging point 24b before the front-wheel connection control valve 27. The check valve 43 is disposed in the left front-wheel bypass 42 to allow an oil flow only from the left front-wheel conduit 30 to the front-wheel supply conduit 24. With respect to the actuator 11FR, the suspension control apparatus 10 has a right front-wheel bypass 44, which is branched off from the right front-wheel conduit 31 at a diverging point 31a and bypasses the front-wheel connection control valve 27 to reach the diverging point 24b before the front-wheel connection control valve 27, and a check valve 45 for lowering the vehicle height, which is disposed in the right front-wheel bypass 44 to allow an oil flow only from the right front-wheel conduit 31 to the front-wheel supply conduit 24. In a similar manner, the suspension control apparatus 10 has a left rear-wheel bypass 46 and a right rear-wheel bypass 48, which are respectively branched off from the left rear-wheel conduit 32 and the right rear-wheel conduit 33 at diverging points 32a and 33a and bypass the rear-wheel connection control valve 29 to reach a diverging point 25b before the rear-wheel connection control valve 29, and check valves 47 and 49 for lowering the vehicle height, with respect to the actuators 11RL and 11RR.

The suspension control apparatus 10 discharges oil from the actuators 11i to lower the vehicle height in the manner discussed below. The following description is with regard to the actuator 11FL as an example.

Oil in the actuator 11FL is discharged to the left front-wheel conduit 30 by the internal pressure of the actuator 11FL. The check valve 35 for raising the vehicle height works to prevent the oil flow to the diverging point 24a but enables the oil flow from the diverging point 30a to the left front-wheel bypass 42. Since the check valve 43 for lowering the vehicle height disposed in the left front-wheel bypass 42 allows the oil flow only from the left front-wheel bypass 42 to the diverging point 24b of the front-wheel supply conduit 24, oil discharged from the actuator 11FL bypasses the front-wheel connection control valve 27 and is flown out of the left front-wheel bypass 42 to the front-wheel supply conduit 24. The front-wheel control valve 26 is at the two-way connecting position 26a in this state as discussed above, and oil is accordingly flown via the front-wheel control valve 26 to the main supply conduit 23. As discussed previously, the pump 20 is stopped and the discharge control valve 41 opens the drain pipe 40 at the time of lowering the vehicle height. Oil discharged from the actuator 11FL thus passes through the drain pipe 40 and is returned to the reserve tank 16 for recycling. This procedure lowers the vehicle height at the wheels corresponding to the actuators 11i from which oil has been discharged. The front-wheel control valve 26 and the rear-wheel control valve 28 are switched independently, and the vehicle height can thus be lowered only for the left and right front wheels, only for the left and right rear wheels, or for all the wheels of the vehicle.

The vehicle height is maintained by switching the front-wheel control valve 26 and the rear-wheel control valve 28 to the single-way connecting positions 26b and 28b as discussed below. In this state, the motor 18 is at a stop.

The suspension control apparatus 10 is also provided with a reflux conduit 50 that is branched off from the main supply conduit 23 and joins the drain pipe 40. The reflux conduit 50 forcibly returns oil into the reserve tank 16 when the pressure in the main supply conduit 23 unintentionally increases. The reflux conduit 50 is opened and closed by a relief valve 51. The relief valve 51 generally closes the flow path of the reflux conduit 50 and is actuated with an increase in pressure in the main supply conduit 23 to connect the reflux conduit 50 to the drain pipe 40. When the pressure increases, oil is not supplied to the actuators 11i but is returned into the reserve tank 16. This structure prevents oil from being fed to the actuators 11i at the unintentionally high pressure and thereby protects the actuators 11i from damages.

While the front-wheel control valve 26 is at the single-way connecting position 26b shown in Fig. 1, in case that the internal pressure of the actuator 11i is abnormally heightened by some cause and oil is discharged to the main supply conduit 23, the pressure increase causes the discharge control valve 41 to open the drain pipe 40 and the relief valve 51 to connect the reflux conduit 50 to the drain pipe 40. Under such abnormal conditions, oil is quickly returned to the reserve tank 16 through the drain pipe 40 and the reflux conduit 50.

The suspension control apparatus 10 has vehicle height sensors 52i corresponding to the respective actuators 11i. The vehicle height sensor 52i measures the vehicle height at each wheel and outputs a detection signal representing a measured vehicle height hi to an electronic control unit (ECU) 60.

The ECU 60 is constructed as a microcomputer including a CPU, a ROM, a RAM, and a timer, and receives signals output from a group of sensors and switches 61 and signals from a pressure sensor 62 that measures the pressure in the main supply conduit 23. The group of sensors and switches 61 include a steering angle sensor, a vehicle speed sensor, a vertical acceleration (vertical G) sensor, a vehicle height setting switch, a brake sensor, and an ignition switch (IGSW switch), in addition to the vehicle height sensors 52i for the respective wheels. The ECU 60 outputs a variety of driving signals required for the adjustment of the vehicle height to the front-wheel control valve 26, the rear-wheel control valve 28, and the motor 18, in response to these input signals. The ECU 60 also outputs driving signals to the front-wheel connection control valve 27 and the rear-wheel connection control valve 29, in order to switch the pair of actuators 11FL and 11FR between the connecting position and the disconnecting position as well as the pair of actuators 11RL and 11RR between the connecting position and the disconnecting position. The ECU 60 is further connected to the variable diaphragms 14i of the damping force varying mechanisms 15i, and regulates the openings of the variable diaphragms 14i to enable the actuators 11i to vary the damping force.

The driver operates the vehicle height setting switch to select the level of the vehicle height among the alternatives of HIGH, NORMAL, and LOW and outputs a signal representing the selected level of the vehicle height. It is desirable to maintain the actual height of the vehicle at the level selected by the vehicle height setting switch, that is, at a standard vehicle height. In accordance with another preferable application, the vehicle height setting switch may be replaced by a switch for setting a vehicle height mode. When a HIGH mode is selected, the switch outputs a signal to set the vehicle height at the HIGH level under an ordinary driving condition and outputs a signal to set the vehicle height at the NORMAL level under a high-speed driving condition. When a NORMAL mode is selected, on the other hand, the switch outputs a signal to set the vehicle height at the NORMAL level under the ordinary driving condition and outputs a signal to set the vehicle height at the LOW level under the high-speed driving condition. In this case, the standard vehicle height is selected according to the vehicle speed among the alternatives of HIGH, NORMAL, and LOW.

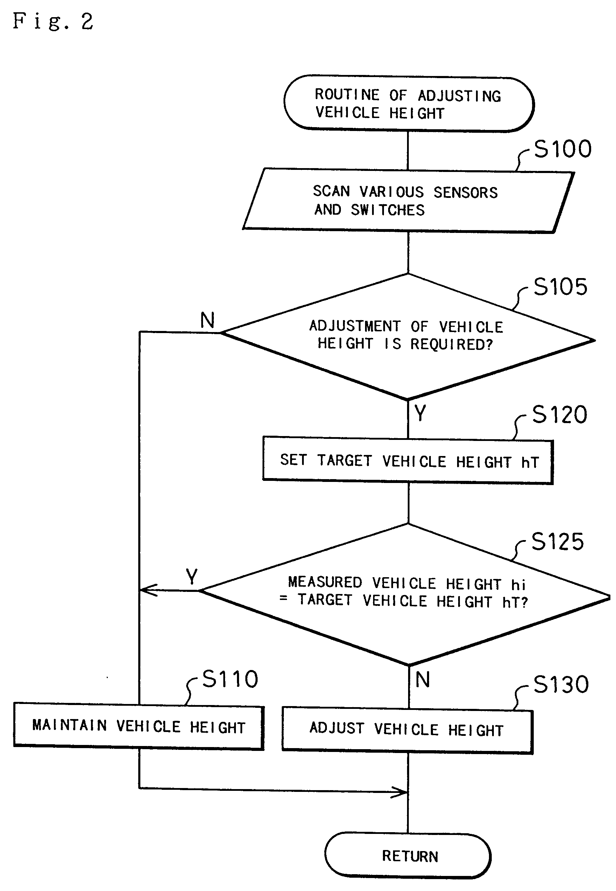

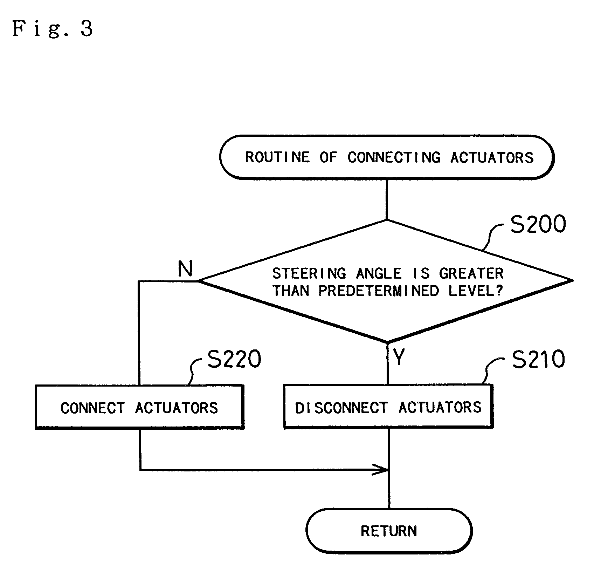

Figs. 2 and 3 are flowcharts showing a routine of adjusting the vehicle height and a routine of connecting the pair of actuators, which are executed by the ECU 60.

The routine of adjusting the vehicle height shown by the flowchart of Fig. 2 starts immediately after an operation of the IGSW switch and is repeatedly executed at predetermined time intervals. A known initialization process is carried out immediately after each operation of the IGSW switch. When the program enters the vehicle height adjustment routine, the ECU 60 first scans the variety of sensors and switches mentioned above and reads the signals required for the adjustment of the vehicle height at step S100. The signals input at step S100 include data of vehicle speed measured by the vehicle speed sensor, data of vehicle height hi (that is, a vehicle height hFL at the left front wheel, a vehicle height hFR at the right front wheel, a vehicle height hRL at the left rear wheel, and a vehicle height hRR at the right rear wheel) measured by the vehicle height sensors 52i, a signal output from the brake switch to represent operation or non-operation of a foot brake, data of steering angle measured by the steering angle sensor, and a vehicle height setting signal output from the vehicle height setting switch. Required signal processing (for example, calculation of the steering angular velocity from the input data of steering angle) is carried out with the scan.

After the scan of the sensors and switches, the ECU 60 determines whether or not the adjustment of the vehicle height is required at step S105, based on the various input signals. When the vehicle is in the state of an abrupt turn or in the state of a high-speed turn, the vehicle is significantly rolled. The adjustment of the vehicle height under such conditions leads to deterioration of the driving stability and is thus not desirable. When it is determined at step S105 that the adjustment of the vehicle height is not required, for example, based on the signal output from the steering angle sensor, the program does not carry out any adjustment of the vehicle height but proceeds to step S110 to maintain the vehicle height at the moment. In accordance with a concrete procedure, the ECU 60 outputs switching signals to the front-wheel control valve 26 and the rear-wheel control valve 28 to switch these control valves 26 and 28 to the respective single-way connecting positions 26b and 28b and outputs a stop signal to the motor 18, thereby maintaining the vehicle height in the manner discussed previously. The program then exits from the vehicle height adjustment routine.

In case that the vehicle is in the state of a turn and does not require adjustment of the height, the routine of connecting the pair of actuators shown by the flowchart of Fig. 3 is executed to depress an increase in rolling angle caused by the turn. The pair of actuators connecting routine is also executed repeatedly at predetermined time intervals. The preference in interruption is given to either the vehicle height adjustment routine or the pair of actuators connecting routine as determined in advance.

When the program enters the pair of actuators connecting routine shown by the flowchart of Fig. 3, the ECU 60 first determines whether or not the data of steering angle obtained from the steering angle sensor is equal to or greater than a predetermined value at step S200. The determination of step S200 may alternatively be based on the data of steering angular velocity. When the answer is affirmative at step S200, the program determines that the vehicle is in the state of a large turn or an abrupt turn and proceeds to step S210 to disconnect the pair of actuators 11FL and 11FR from each other and to disconnect the pair of actuators 11RL and 11RR from each other. In accordance with a concrete procedure, the ECU 60 outputs switching signals to the front-wheel connection control valve 27 and the rear-wheel connection control valve 29 to switch these connection control valves 27 and 29 to the respective single-way connecting positions 27b and 29b. When the front-wheel connection control valve 27 is switched to the single-way connecting position 27b, the oil flow from the actuator 11FL to the actuator 11FR and the reversed oil flow are blocked by the check valves 35 and 36 for raising the vehicle height and the connection control valve 27 at the single-way connecting position 27b. This process results in disconnecting the pair of actuators 11FL and 11FR from each other. The pair of actuators 11RL and 11RR are also disconnected from each other in a similar manner.

When the answer is negative at step S200, on the contrary, the program proceeds to step S220 to connect the pair of actuators 11FL and 11FR with each other and to connect the pair of actuators 11RL and 11RR with each other. In accordance with a concrete procedure, the ECU 60 outputs switching signals to the front-wheel connection control valve 27 and the rear-wheel connection control valve 29 to switch these connection control valves 27 and 29 to the respective two-way connecting positions 27a and 29a. When the front-wheel connection control valve 27 is switched to the two-way connecting position 27a, the check valve 43 for lowering the vehicle height, the connection control valve 27 at the two-way connecting position 27a, and the check valve 36 for raising the vehicle height function to connect the left front-wheel conduit 30 successively to the left front-wheel bypass 42, the front-wheel supply conduit 24, and the right front-wheel conduit 31 and form the oil flow path from the actuator 11FL to the actuator 11FR. The check valve 45 for lowering the vehicle height, the connection control valve 27 at the two-way connecting position 27a, and the check valve 35 for raising the vehicle height, on the other hand, function to connect the right front-wheel conduit 31 successively to the right front-wheel bypass 44, the front-wheel supply conduit 24, and the left front-wheel conduit 30 and form the oil flow path from the actuator 11FR to the actuator 11FL. This process results in mutually connecting the pair of actuators 11FL and 11FR with each other. The pair of actuators 11RL and 11RR are also mutually connected with each other in a similar manner.

This procedure appropriately connects or disconnects the pair of actuators 11FL and 11FR (11RL and 11RR) with each other or from each other, thereby depressing an increase in pressure of the whole system at the time of an extreme input of road surface, such as tramping, ensuring the driving stability at a drive on a rough road surface, and depressing an increase in rolling angle at a turn of the vehicle.

Referring back to the flowchart of Fig. 2, when the answer is affirmative at step S105, the program proceeds to step S120, at which the ECU 60 sets a target vehicle height hT, which is the target of the vehicle height adjustment, for example, based on the vehicle speed at the moment and the vehicle height setting signal (standard vehicle height hH) output from the vehicle height setting switch. It is then determined whether or not the measured vehicle height hi coincides with the target vehicle height hT at step S125. In this embodiment, the vehicle height can be adjusted independently for the left and right front wheels and for the left and right rear wheels. As for the left and right front wheels, the mean value of the left front-wheel vehicle height hFL and the right front-wheel vehicle height hFR is used as the measured vehicle height hi for the determination. As for the left and right rear wheels, the mean value of the left rear-wheel vehicle height hRL and the right rear-wheel vehicle height hRR is used as the measured vehicle height hi for the determination. The measured vehicle height hi is determined to coincide with the target vehicle height hT when the measured vehicle height hi is within a predetermined range around the target vehicle height hT (that is, the target vehicle height hT ± e).

When the answer is affirmative at step S125, the program determines no requirement for the adjustment of the vehicle height and proceeds to step S110 to maintain the vehicle height at the moment. In case that the answer at step S125 is affirmative only for the left and right front wheels, the vehicle height is maintained at the left and right front wheels of interest.

When it is determined that the measured vehicle height hi does not coincide with the target vehicle height hT at step S125, the program proceeds to step S130 to calculate a vehicle height difference or deviation Δh of the measured vehicle height hi from the target vehicle height hT and adjust the vehicle height, in order to cancel the deviation Δh, that is, in order to make the measured vehicle height hi coincident with the target vehicle height hT set at step S120. The adjustment of the vehicle height is carried out only for the wheels having the negative answer at step S125 (only for the left and right front wheels, only for the left and right rear wheels, or for all the wheels).

The procedure of adjusting the vehicle height is described in a greater detail. In case that the measured vehicle height hi is lower than the target vehicle height hT, the ECU 60 drives the motor 18 and outputs the switching signals to the front-wheel control valve 26 and the rear-wheel control valve 28 to switch these control valves 26 and 28 to the respective two-way connecting positions 26a and 28a, thereby increasing the vehicle height in the manner discussed previously. The time period for which the front-wheel control valve 26 and the rear-wheel control valve 28 are at the two-way connecting positions 26a and 28a, that is, the amount of increase in vehicle height, is determined according to the vehicle height difference Δh. In this embodiment, the amount of increase in vehicle height corresponding to the vehicle height difference Δh is read from a map previously stored in the RAM.

In case that the measured vehicle height hi is higher than the target vehicle height hT, on the other hand, the ECU 60 stops the motor 18 and outputs the switching signals to the front-wheel control valve 26 and the rear-wheel control valve 28 to switch these control valves 26 and 28 to the respective two-way connecting positions 26a and 28a, thereby lowering the vehicle height in the manner discussed previously. The time period for which the front-wheel control valve 26 and the rear-wheel control valve 28 are at the two-way connecting positions 26a and 28a, that is, the amount of decrease in vehicle height, is also determined according to the vehicle height difference Δh.

In the suspension control apparatus 10 of the embodiment discussed above, the vehicle height can be lowered by discharging oil from the actuator 11i, for example, the actuator 11FL. In accordance with a concrete procedure, the check valve 35 for raising the vehicle height disposed after the front-wheel connection control valve 27 and the check valve 43 for lowering the vehicle height disposed in the left front-wheel bypass 42 function to enable oil in the actuator 11FL to bypass the front-wheel connection control valve 27 and flow successively through the left front-wheel bypass 42, the front-wheel supply conduit 24, and the main supply conduit 23 to be returned to the reserve tank 16 for recycling. The oil discharged from the actuator 11FL bypasses the front-wheel connection control valve 27. This effectively reduces the pressure loss due to the flow through the front-wheel connection control valve 27 and enhances the flow rate of oil discharge. This is true for all the actuators 11i. The suspension control apparatus 10 of the embodiment improves the flow rate of oil discharge from the actuators 11i, thereby increasing the descending rate of the vehicle height and attaining the desired vehicle height within a very short time period.

In the suspension control apparatus 10, oil discharged from the actuators 11i flows through the check valves 43 to 49 for lowering the vehicle height. Unlike the orifice of the conventional structure, the check valve is not required to narrow the diameter of the oil flow path and thereby does not cause any significant pressure loss in the course of oil flow. The flow rate of oil discharge through any one of the check valves 43 to 49 for lowering the vehicle height is thus substantially equal to that through the front-wheel connection control valve 27 or the rear-wheel connection control valve 29.

In the suspension control apparatus 10 of the embodiment, the main supply conduit 23 is branched off to the front-wheel supply conduit 24 and the rear-wheel supply conduit 25, so that the front wheels and the rear wheels have separate circuit structures for adjustment of the vehicle height. This structure enables the vehicle height to be quickly lowered at all the wheels of the vehicle as well as to be quickly and independently lowered only at the left and right front wheels or at the left and right rear wheels.

The present invention is not restricted to the above embodiment, but there may be many modifications, changes, and alterations without departing from the scope or spirit of the main characteristics of the present invention. By way of example, the front-wheel control valve 26 and the rear-wheel control valve 28 may be switched between the two-way connecting position and a disconnecting position at which the flow path is completely blocked. The front-wheel connection control valve 27 and the rear-wheel connection control valve 29 may also have this alternative structure.

The suspension control apparatus 10 may have the left front-wheel bypass 42 and the right front-wheel bypass 44 that bypass the front-wheel connection control valve 27 only for the left and right front wheels. This structure enables the front wheels to be lowered consistently prior to the rear wheels, and thereby prevents headlamp from unintentionally turning upward when the driver lowers the vehicle height during a night drive.

It should be clearly understood that the above embodiment is only illustrative and not restrictive in any sense. The scope and spirit of the present invention are limited only by the terms of the appended claims.

## Claims

1. A suspension control (10) apparatus comprising actuators (11i) interposed between a vehicle body and respective wheels to suspend said vehicle body and change a vehicle height through supply or discharge of a working fluid, said suspension control apparatus driving and controlling a control valve (26, 28) for supplying and discharging the working fluid to and from said actuators, so as to adjust the vehicle height, characterised in that said suspension control apparatus further comprises:
connection control means (27, 29) disposed in a flow path between said control valve (26, 28) and a pair of said actuators (11FL, 11FR; 11RL, 11RR) corresponding to a pair of wheels, said connection control means (27, 29) switching said a pair of said actuators between a connecting position (27a, 29a) and a disconnecting position (27b, 29b); and
bypass means (42-45; 46-49) for bypassing said connection control means (27, 29) and leading the working fluid to said control valve (26, 28) only when the working fluid is discharged from said actuators (11i).

2. A suspension control apparatus in accordance with claim 1, wherein said connection control means comprising:
a front-wheel connection control valve (27) disposed in a flow path between said control valve (26) and a pair of front-wheel actuators (11FL, 11FR) corresponding to left and right front wheels, said front-wheel connection control valve switching said pair of front-wheel actuators between a connecting position (27a) and a disconnecting position (27b); and
a rear-wheel connection control valve (29) disposed in a flow path between said control valve (28) and a pair of rear-wheel actuators (11RL, 11RR) corresponding to left and right rear wheels, said rear-wheel connection control valve (29) switching said pair of rear-wheel actuators between a connecting position (29a) and a disconnecting position (29b);
wherein said bypass means comprising:
front-wheel bypass means (42-45) and rear-wheel bypass means (46-49) for respectively bypassing said front-wheel connection control valve (27) and said rear-wheel connection control valve (29) and leading the working fluid to said control valve only when the working fluid is discharged from said actuators.

3. A suspension control apparatus in accordance with claim 1, wherein said connection control means (27, 29) is disposed only in a flow path between said control valve (26) and a pair of front-wheel actuators (11FL, 11FR) corresponding to left and right front wheels and switches said pair of front-wheel actuators between a connecting position (27a) and a disconnecting position (27b).

4. A method of controlling a suspension control apparatus according to claim 1, said method comprising the steps of: providing actuators (11i) interposed between a vehicle body and respective wheels to suspend said vehicle body and change a vehicle height through supply or discharge of a working fluid; and driving and controlling a control valve (26, 28) for supplying and discharging the working fluid to and from said actuators, so as to adjust the vehicle height, characterised in that said method further comprises the step of:
bypassing connection control means (27, 29) and leading the working fluid to said control valve (26, 28) only when the working fluid is discharged from said actuators, said connection control (27, 29) means being disposed in a flow path between said control valve (26, 28) and a pair of said actuators corresponding to a pair of wheels and switching said a pair of said actuators between a connecting position and a disconnecting position.

5. A method in accordance with claim 4, said method comprising the step of:
bypassing said connection control means (27, 29) and leading the working fluid to said control valve (26, 28) only when the working fluid is discharged from said actuators, said connection control means comprising a front-wheel connection control valve (27) and a rear-wheel connection control valve (29), said front-wheel connection control valve (27) being disposed in a flow path between said control valve (26) and a pair of front-wheel actuators corresponding to left and right front wheels and switching said pair of front-wheel actuators between a connecting position (27a) and a disconnecting position (27b), said rear-wheel connection control valve (29) being disposed in a flow path between said control valve (28) and a pair of rear-wheel actuators corresponding to left and right rear wheels and switching said pair of rear-wheel actuators between a connecting position (27a) and a disconnecting position (27b).

6. A method in accordance with claim 4, said method comprising the step of:
bypassing said connection control means and leading the working fluid to said control valve only when the working fluid is discharged from said actuators, said connection control means being disposed only in a flow path between said control valve (26) and a pair of front-wheel actuators (11FL, 11FR) corresponding to left and right front wheels and switching said pair of front-wheel actuators between a connecting position (27a) and a disconnecting position (27b).

## Patentansprüche

1. Vorrichtung (10) zur Regelung einer Federung, die zwischen einer Fahrzeugkarosserie und jeweiligen Rädern angeordnete Aktuatoren (11) zur Federung der Fahrzeugkarosserie und Änderung der Fahrzeughöhe durch Zu- oder Abfuhr eines Arbeitsfluids umfaßt und ein Steuerventil (26, 28) zur Zufuhr und Abfuhr des Arbeitsfluids zu bzw. von den Aktuatoren ansteuert, um die Fahrzeughöhe einzustellen, gekennzeichnet durch
eine Anschlußsteuereinrichtung (27, 29), die im Strömungsweg zwischen dem Steuerventil (26, 28) und einem Paar von Aktuatoren (11FL, 11FR; 11RL, 11RR) entsprechend einem Paar von Rädern angeordnet ist und das Paar von Aktuatoren zwischen einer Anschlußstellung (27a, 29a) und einer Trennstellung (27b, 29b) umschaltet, und
eine Umleitungseinrichtung (42 - 45; 46 - 49) zum Umgehen der Anschlußsteuereinrichtung (27, 29) und Leiten des Arbeitsfluids zum Steuerventil (26, 28) nur dann, wenn es von den Aktuatoren (11) abgegeben wird.

2. Vorrichtung zur Regelung der Federung nach Anspruch 1, wobei die Anschlußsteuereinrichtung umfaßt:
ein Vorderradanschlußsteuerventil (27), das im Strömungsweg zwischen dem Steuerventil (26) und dem Paar von Vorderradaktuatoren (11FL, 11FR) entsprechend dem linken und rechten Vorderrad angeordnet ist und das Paar von Vorderradaktuatoren zwischen der Anschlußstellung (27a) und der Trennstellung (27b) umschaltet, und
ein Hinterradanschlußsteuerventil (29), das im Strömungsweg zwischen dem Steuerventil (28) und dem Paar von Hinterrradaktuatoren (11RL, 11RR) entsprechend dem linken und rechten Hinterrad angeordnet ist und das Paar von Hinterradaktuatoren zwischen der Anschlußstellung (29a) und der Trennstellung (29b) umschaltet,
wobei die Umleitungseinrichtung umfaßt:
eine Vorderrad-Umleitungseinrichtung (42 - 45) und eine Hinterrad-Umleitungseinrichtung (46 - 49) zum Umgehen des Vorderradanschlußsteuerventils (27) bzw. des Hinterradanschlußsteuerventils (29) und Leiten des Arbeitsfluids zum Steuerventil nur dann, wenn es von den Aktuatoren abgegeben wird.

3. Vorrichtung zur Regelung der Federung nach Anspruch 1, wobei die Anschlußsteuereinrichtung (27, 29) nur im Strömungsweg zwischen dem Steuerventil (26) und dem Paar von Vorderradaktuatoren (11FL, 11FR) entsprechend dem linken und rechten Vorderrad angeordnet ist und das Paar von Vorderradaktuatoren zwischen der Anschlußstellung (27a) und der Trennstellung (27b) umschaltet.

4. Verfahren zur Steuerung einer Vorrichtung zur Regelung einer Federung nach Anspruch 1, umfassend folgende Schritte:
Vorsehen von zwischen einer Fahrzeugkarosserie und jeweiligen Rädern angeordneten Aktuatoren (11) zur Federung der Fahrzeugkarosserie und Änderung der Fahrzeughöhe durch Zu- oder Abfuhr eines Arbeitsfluids, und
Ansteuern eines Steuerventil (26, 28) zur Zufuhr und Abfuhr von Arbeitsfluid zu bzw. von den Aktuatoren, um die Fahrzeughöhe einzustellen,
gekennzeichnet durch den weiteren Schritt:
Umgehen einer Anschlußsteuereinrichtung (27, 29) und Leiten des Arbeitsfluids zum Steuerventil (26, 28) nur dann, wenn es von den Aktuatoren (11) abgegeben wird, wobei die Anschlußsteuereinrichtung (27, 29) im Strömungsweg zwischen dem Steuerventil (26, 28) und einem Paar von Aktuatoren entsprechend einem Paar von Rädern angeordnet ist und das Paar von Aktuatoren zwischen einer Anschlußstellung und einer Trennstellung umschaltet.

5. Verfahren nach Anspruch 4, umfassend folgenden Schritt:
Umgehen der Anschlußsteuereinrichtung (27, 29) und Leiten des Arbeitsfluids zum Steuerventil (26, 28) nur dann, wenn es von den Aktuatoren abgegeben wird, wobei die Anschlußsteuereinrichtung ein Vorderradanschlußsteuerventil (27) und ein Hinterradanschlußsteuerventil (29) umfaßt, wobei das Vorderradanschlußsteuerventil (27) im Strömungsweg zwischen dem Steuerventil (26) und dem Paar von Vorderradaktuatoren entsprechend dem linken und rechten Vorderrad angeordnet ist und das Paar von Vorderradaktuatoren zwischen der Anschlußstellung (27a) und der Trennstellung (27b) umschaltet, und wobei das Hinterradanschlußsteuerventil (29) im Strömungsweg zwischen dem Steuerventil (28) und dem Paar von Hinterrradaktuatoren entsprechend dem linken und rechten Hinterrad angeordnet ist und das Paar von Hinterradaktuatoren zwischen der Anschlußstellung (27a) und der Trennstellung (27b) umschaltet.

6. Verfahren nach Anspruch 4, umfassend folgenden Schritt:
Umgehen der Anschlußsteuereinrichtung und Leiten des Arbeitsfluids zum Steuerventil nur dann, wenn es von den Aktuatoren abgegeben wird, wobei die Anschlußsteuereinrichtung nur im Strömungsweg zwischen dem Steuerventil (26) und dem Paar von Vorderradaktuatoren (11FL, 11FR) entsprechend dem linken und rechten Vorderrad angeordnet ist und das Paar von Vorderradaktuatoren zwischen der Anschlußstellung (27a) und der Trennstellung (27b) umschaltet.

## Revendications

1. Un dispositif de contrôle de suspension (10) comprenant des organes d'actionnement (11i) interposés entre une caisse de véhicule et des roues correspondantes pour réaliser la suspension de ladite caisse de véhicule et pour modifier la hauteur du véhicule par fourniture ou échappement d'un fluide de travail, ledit dispositif de contrôle de suspension commandant et contrôlant une valve de contrôle (26, 28) pour alimenter en fluide de travail et échapper le fluide de travail respectivement vers et de la partie desdits organes d'actionnement, de façon à régler la hauteur du véhicule, caractérisé en ce que ledit dispositif de contrôle de suspension comporte en outre :
des moyens de contrôle de liaison (27, 29) disposés dans un passage d'écoulement entre ladite valve de contrôle (26, 28) et deux desdits organes d'actionnement (11FL, 11FR ; 11RL, 11 RR) correspondant à deux roues, lesdits moyens de contrôle de liaison (27, 29) commutant lesdits deux organes d'actionnement entre une position de liaison (27a, 29a) et une position d'absence de liaison (27b, 29b) ; et
des moyens de dérivation (42 à 45 ; 46 à 49) pour établir une dérivation desdits moyens de contrôle de liaison (27, 29) et pour conduire le fluide de travail vers ladite valve de contrôle (26, 28) uniquement lorsque le fluide de travail est déchargé desdits organes d'actionnement (11i).

2. Un dispositif de contrôle de suspension selon la revendication 1, dans lequel lesdits moyens de contrôle de liaison comportent :
une valve (27) de contrôle de connexion de roue avant, disposée sur un trajet d'écoulement entre ladite valve de contrôle (26) et deux organes d'actionnement de roue avant (11FL, 11FR) correspondant aux roues avant gauche et droite, ladite valve de contrôle de liaison de roue avant commutant lesdits deux organes d' actionnement de roue avant entre une position de liaison (27a) et une position d'absence de liaison (27b) ; et
une valve (29) de contrôle de liaison de roue arrière, disposée sur un trajet d'écoulement entre ladite valve de contrôle (28) et deux des organes d'actionnement de roue arrière (11RL, 11RR) correspondant aux roues arrière gauche et droite, ladite valve (29) de contrôle de liaison de roue arrière commutant lesdits deux organes d'actionnement de roue arrière entre une position de liaison (29a) et une position d'absence de liaison (29b) ;
lesdits moyens de dérivation comprenant :
des moyens (42 à 45) de dérivation de roue avant et des moyens (46 à 49) de dérivation de roue arrière pour réaliser une dérivation, respectivement par rapport à ladite valve (27) de contrôle de liaison de roue avant et par rapport à ladite valve (29) de contrôle de liaison de roue arrière, et pour conduire le fluide de travail vers ladite valve de contrôle uniquement lorsque le fluide de travail est déchargé desdits organes d'actionnement.

3. Un dispositif de contrôle de suspension selon la revendication 1, dans lequel lesdits moyens (27, 29) de contrôle de liaison sont disposés uniquement sur un trajet d'écoulement entre ladite valve de contrôle (26) et deux des organes d'actionnement (11FL, 11FR) de roue avant correspondant aux roues avant gauche et droite et commutent lesdits deux organes d' actionnement de roue avant entre une position de liaison (27a) et une position d'absence de liaison (27b).

4. Un procédé de contrôle d'un dispositif de contrôle de suspension selon la revendication 1, ledit procédé comprenant les étapes consistant :
à prévoir des organes d'actionnement (11i) interposés entre une caisse de véhicule et les roues correspondantes pour réaliser la suspension de ladite caisse de véhicule et modifier la hauteur du véhicule par fourniture ou échappement d'un fluide de travail ; et
à actionner et contrôler une valve de contrôle (26, 28) pour fournir et mettre à échappement le fluide de travail vers et en provenance desdits organes d'actionnement de façon à régler la hauteur du véhicule,
caractérisé en ce que ledit procédé comporte en outre l'étape consistant :
à réaliser une dérivation par rapport aux moyens (27, 29) de contrôle de connexion et à conduire le fluide de travail vers ladite valve de contrôle (26, 28) uniquement lorsque le fluide de travail est déchargé desdits organes d'actionnement, lesdits moyens (27, 29) de contrôle de liaison étant disposés sur un trajet d'écoulement entre ladite valve de contrôle (26, 28) et deux desdits organes d'actionnement correspondant à deux roues et à commuter lesdits deux organes d'actionnement entre une position de liaison et une position d'absence de liaison.

5. Un procédé selon la revendication 4, ledit procédé comprenant l'étape consistant :
à réaliser une dérivation par rapport aux moyens (27, 29) de contrôle de liaison et à conduire le fluide de travail vers ladite valve de contrôle (26, 28), uniquement lorsque le fluide de travail est déchargé desdits organes d'actionnement, lesdits moyens de contrôle de liaison comprenant une valve (27) de contrôle de liaison de roue avant et une valve (29) de contrôle de liaison de roue arrière, ladite valve (27) de contrôle de liaison de roue avant étant disposée sur un trajet d'écoulement entre ladite valve de contrôle (26) et deux organes d'actionnement de roue avant correspondant aux roues avant droite et gauche et à commuter lesdits deux organes d'actionnement de roue avant entre une position de liaison (27a) et une position d'absence de liaison (27b), ladite valve (29) de contrôle de liaison de roue arrière étant disposée sur un trajet d'écoulement entre ladite valve de contrôle (28) et deux des organes d'actionnement de roue arrière correspondant aux roues arrière droite et gauche et à commuter lesdits deux organes d'actionnement de roue arrière entre une position de liaison (27a) et une position d'absence de liaison (27b).

6. Un procédé selon la revendication 4, ledit procédé comprenant l'étape consistant :
à réaliser une dérivation par rapport auxdits moyens de contrôle de liaison et à conduire le fluide de travail vers ladite valve de contrôle uniquement lorsque le fluide de travail est déchargé desdits organes d'actionnement, lesdits moyens de contrôle de liaison étant disposés uniquement sur un trajet d'écoulement entre ladite valve de contrôle (26) et les deux organes d'actionnement de roue avant (11FL, 11FR) correspondant aux roues avant droite et gauche et à commuter lesdits deux organes d'actionnement de roue avant entre une position de liaison (27a) et une position d'absence de liaison (27b).
